# FASCICULE DE BREVET EUROPEEN

(11) **EP 4 587 328 B1**
(45) Date de publication et mention de la délivrance du brevet: **15.07.2026**
(21) Numéro de dépôt: 23745207.3
(22) Date de dépôt: 25.07.2023
(51) Int. Cl.: B64D 11/06

(54) **MEUBLE MUNI D'UN DISPOTIF DE DÉPLOIEMENT ROTATIF D'UN ÉLÉMENT MOBILE**
MÖBELSTÜCK MIT EINER VORRICHTUNG ZUM DREHBAREN AUSKLAPPEN EINES BEWEGLICHEN ELEMENTS
ITEM OF FURNITURE PROVIDED WITH A DEVICE FOR ROTATABLY DEPLOYING A MOVABLE ELEMENT

(30) Priorité: 14.09.2022 FR 2209220
(43) Date de publication de la demande: 23.07.2025
(73) Titulaire: Safran Seats, 78370 Plaisir (FR)
(72) Inventeur: LOPEZ, Bruno, 77550 Moissy-Cramayel (FR); LEROY, Pierre, 77550 Moissy-Cramayel (FR)
(74) Mandataire: Marconnet, Sébastien
(86) Numéro de dépôt international: PCT/EP2023/070621
(87) Numéro de publication internationale: WO 2024/056258

(56) Documents cités:
- US-A1- 2003 062 730
- US-A1- 2018 251 057
- US-B1- 6 247 733

## Description

La présente invention porte sur un meuble muni d'un dispositif de déploiement rotatif d'un élément mobile. L'invention trouve une application particulièrement avantageuse, mais non exclusive, avec les tablettes repas installées sur les unités de sièges d'avion de type "classe affaires" et "première classe".

De façon connue en soi, un système de déploiement de type "push-pull" (ou "pousser-tirer" en français) permet de faciliter l'ouverture d'un élément mobile d'un meuble, comme par exemple un tiroir, une porte de meuble, ou une tablette. À cette fin, l'utilisateur applique sur l'élément mobile un effort de pression ayant pour effet d'activer un organe élastique qui écarte l'élément mobile de sa position fermée. Il est alors possible pour l'utilisateur de tirer l'élément mobile en direction de sa position ouverte.

Toutefois, les dispositifs existants sont encombrants et fonctionnent généralement suivant une cinématique de translation. Il existe donc le besoin d'un système de déploiement de type push-pull pour des éléments mobiles en rotation.

Le document US6247733 décrit un loquet du type à poussoir et une goupille montés sur des éléments correspondants mobile et fixe, tels qu'un tiroir ou une porte et son cadre. Le loquet utilise une navette présentant une courbure qui déclenche le verrouillage et le déverrouillage de la goupille. La navette est montée sur le corps au moyen d'un pivot décentré. Lorsque la goupille se déplace d'arrière en avant dans la navette, celle-ci pivote de manière à régler l'emplacement de la goupille dans la courbure de la navette. Le loquet peut comporter une fourchette sollicitée par ressort, qui sert à produire un déclic sonore pour signaler le verrouillage et le déverrouillage du loquet.

Le document US2018/251057 décrit un ensemble de plateaux escamotables pour un véhicule automobile comportant un boîtier situé entre des sièges. Deux plateaux sont rangés dans le boîtier et déployés sur des bras rotatifs. Les bras sont sollicités par un organe élastique vers la position de déploiement et lorsqu'ils sont rangés, les plateaux sont maintenus en place par des loquets.

Le document US2003/062730 décrit un loquet comprenant une partie de fixation mobile en rotation par rapport à une partie attachée, une plaque de base reliée à la partie de fixation pour tourner avec la partie de fixation sur la partie attachée, et une came connectée à la plaque de base.

L'invention vise à combler efficacement ce besoin en proposant un meuble notamment pour un siège d'avion comportant:
- un châssis,
- un élément mobile,
- une liaison pivot disposée entre l'élément mobile et le châssis pour autoriser une rotation de l'élément mobile par rapport au châssis entre une position stockée et une position déployée,
   et
- une came munie d'une empreinte de verrouillage,
- la came est intégrée à l'élément mobile,
- ledit meuble comportant en outre un bras fixe par rapport au châssis, ledit bras portant un doigt de verrouillage,
- ledit bras comportant au moins une portion constituée par un organe élastique sollicitant, lorsqu'il est sous tension, le doigt de verrouillage à l'intérieur de l'empreinte de verrouillage lorsque l'élément mobile est en position stockée,
- de sorte qu'un appui sur l'élément mobile entraîne une rotation de l'élément mobile suivant un premier sens de rotation et une libération du doigt de verrouillage en dehors de l'empreinte de verrouillage par l'organe élastique pour autoriser une rotation de l'élément mobile vers la position déployée suivant un deuxième sens de rotation, le premier sens de rotation et le deuxième sens de rotation étant opposés l'un par rapport à l'autre.

L'invention permet ainsi d'intégrer un système de déploiement d'un élément mobile de type "push-pull" autour d'une liaison pivot. L'invention est également simple et robuste dans sa mise en œuvre car les différentes formes fonctionnelles peuvent être usinées sur l'élément mobile. L'invention présente également un caractère esthétique, dans la mesure où le système push-pull n'est pas visible par l'utilisateur depuis l'extérieur du meuble.

Selon une réalisation de l'invention, ledit meuble comporte un ressort de rappel apte à se comprimer lors de l'appui sur l'élément mobile puis à se décomprimer pour éjecter l'élément mobile en dehors du châssis.

Selon une réalisation de l'invention, ledit meuble comporte une lame ressort destinée à coopérer avec une butée de fin de course lorsque l'élément mobile est en position déployée.

Selon une réalisation de l'invention, la butée de fin de course comporte une portion saillante constituant un point dur et une portion de réception de la lame ressort.

Selon une réalisation de l'invention, la butée de fin de course présente une forme en S.

Selon une réalisation de l'invention, l'élément mobile intègre la came et la butée de fin de course, de sorte que l'élément mobile, la came, et la butée de fin de course forment une pièce monobloc.

Selon une réalisation de l'invention, un angle entre la butée de fin de course et l'empreinte de verrouillage de la came est de l'ordre de 270 degrés.

Selon une réalisation de l'invention, la came comporte au moins une pente latérale destinée à guider le doigt de verrouillage vers l'empreinte de verrouillage tout en comprimant l'organe élastique lorsque l'élément mobile passe de la position déployée à la position stockée.

Selon une réalisation de l'invention, l'élément mobile est une tablette.

L'invention a également pour objet une unité de siège d'avion comportant un meuble tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une unité de siège comportant une tablette selon la présente invention;
[Fig. 2] La figure 2 est une vue en perspective d'une tablette selon l'invention en position stockée;
[Fig. 3] La figure 3 est une vue en perspective de la structure interne d'un châssis contenant une tablette selon l'invention;
[Fig. 4] La figure 4 est une vue de côté illustrant le positionnement du doigt de verrouillage à l'intérieur de l'empreinte de verrouillage de la came lorsque la tablette est dans une position stockée;
[Fig. 5] La figure 5 est une vue de dessus illustrant le positionnement relatif du doigt de verrouillage par rapport à la butée de fin de course de la tablette selon l'invention;
[Fig. 6] La figure 6 est une vue de côté illustrant le dégagement du doigt de verrouillage par rapport à l'empreinte de verrouillage de la came suite à un effort de poussée appliqué sur la tablette selon l'invention;
[Fig. 7] La figure 7 est une vue en perspective montrant un positionnement de la tablette selon l'invention suite à son éjection par le ressort de rappel;
[Fig. 8] La figure 8 est une vue de côté illustrant la trajectoire du doigt de verrouillage lors de l'éjection, par le ressort de rappel, de la tablette selon l'invention;
[Fig. 9] La figure 9 est une vue en perspective d'une tablette selon l'invention en position déployée;
[Fig. 10a] [Fig. 10b] Les figures 10a et 10b sont des vues en perspective détaillées illustrant le positionnement de la lame de butée respectivement avant et après le point dur de la butée de fin de course;
[Fig. 11] La figure 11 est une vue en perspective illustrant une trajectoire du doigt de verrouillage suivant une pente de la came de verrouillage lorsque la tablette passe de la position déployée vers la position stockée pour mettre sous tension l'organe élastique;
[Fig. 12] La figure 12 est une vue de côté illustrant le guidage du doigt de verrouillage vers l'empreinte de verrouillage de la came lorsque la tablette passe de la position déployée vers la position stockée.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs du type "inférieur", "supérieur", "gauche", "droite", "horizontal", "vertical" sont entendus par référence au sens commun que leur donnerait un passager assis sur un siège auquel est associé un meuble selon l'invention.

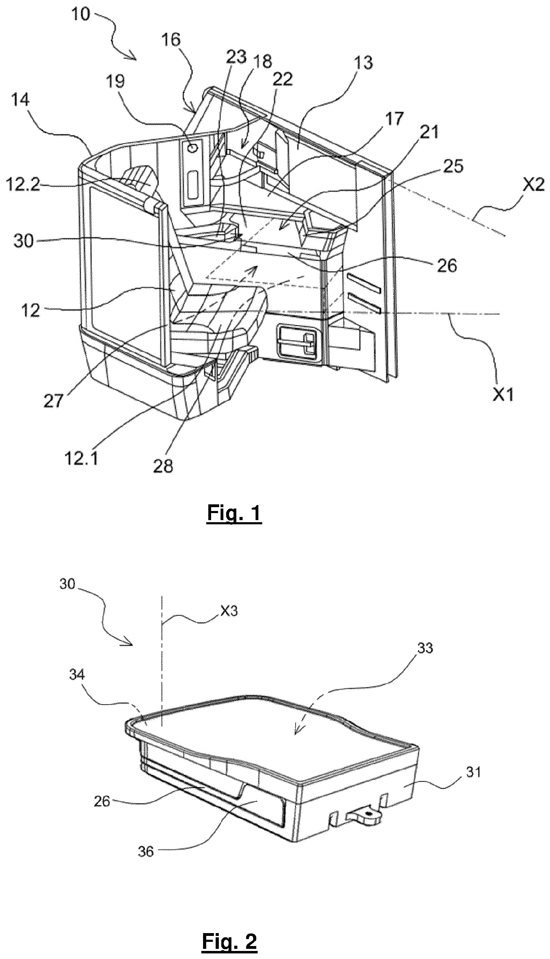

La figure 1 montre une unité de siège 10 comportant un siège 12 associé à une console latérale 13 s'étendant suivant un côté du siège 12.

Plus précisément, le siège 12 comporte une assise 12.1 et un dossier 12.2. Le siège 12 présente un axe d'extension X1 défini par l'intersection entre un plan horizontal et un plan médian vertical du siège 12 correspondant à un plan de symétrie du siège 12. L'axe d'extension X1 du siège 12 peut former un angle non nul par rapport à une direction parallèle ou confondu avec un axe central de l'avion X2. En l'occurrence, le siège 12 est tourné en direction de l'axe X2. En variante, le siège 12 peut être tourné dans une direction opposée à l'axe X2 ou s'étendre parallèlement à l'axe X2.

Le siège 12 est avantageusement pourvu d'une cinématique lui permettant d'être mobile entre une position "assise", dans laquelle le siège 12 est configuré pour définir une position assise d'un passager, et une position "allongée", dans laquelle l'assise 12.1 et le dossier 12.2 définissent une surface de couchage pour le passager, avantageusement sensiblement horizontale. Des positions intermédiaires de confort sont aussi proposées, telles que la position "relax" dans laquelle un dossier du siège 12 est fortement incliné.

Une coque d'intimité 14 s'étend au moins en partie autour du siège 12 de manière à délimiter un espace autour du passager. La coque d'intimité 14 est réalisée par exemple dans un matériau composite. Une telle configuration permet de garantir l'intimité du passager assis sur le siège 12.

Un écran vidéo 16 d'un système multimédia ou IFE (pour "Inflight Entertainment System" en anglais) peut être implanté sur une partie arrière de la coque 14 d'intimité de façon à être utilisable par un passager arrière.

La console 13 peut comporter une paroi supérieure 17 formant une table sur laquelle le passager peut poser des objets ainsi qu'un espace de stockage 18 comportant un ou plusieurs éléments parmi une pochette littérature, un porte-bouteille, ou un minibar. Le choix des rangements est configurable en fonction du souhait de la compagnie aérienne. La console 13 peut également comporter une liseuse 19 destinée à orienter un éclairage en direction du siège 12.

Une cavité 21 est située sous la paroi supérieure 17. La cavité 21 est ouverte latéralement en direction du siège 12. En outre, une face horizontale 22 de la console 13 a notamment une fonction d'accoudoir. A cet effet, la face horizontale 22 peut présenter localement une forme de manchette incurvée 23 épousant la forme d'une partie du bras du passager.

La console 13 comporte également une unité de contrôle 25 du siège 12 et de ses composants annexes (dite "PCU" pour "Passenger Control Unit" en anglais). L'unité de contrôle 25 permet notamment au passager de commander la sélection d'une position du siège 12 ainsi que les composants annexes, tels qu'un système vidéo, un dispositif de chauffage, un système d'ambiance lumineuse ou tout autre composant annexe pouvant être intégré au siège 12.

Afin de permettre l'allongement du passager, la console 13 peut comporter un espace creux 27 vu par transparence sur la figure 1 dans lequel est disposé un ottoman 28. L'ottoman 28 comporte une face horizontale formant un repose-pieds sur lequel un passager arrière peut poser ses pieds lorsque le siège 12 se trouve en position "allongée".

L'unité de siège 10 comporte également une tablette 26 qui peut être utilisée par un passager pour poser des objets, en particulier un plateau repas, des boissons, un ordinateur, ou tout type d'objets personnels dont le passager souhaiterait disposer lors de son voyage.

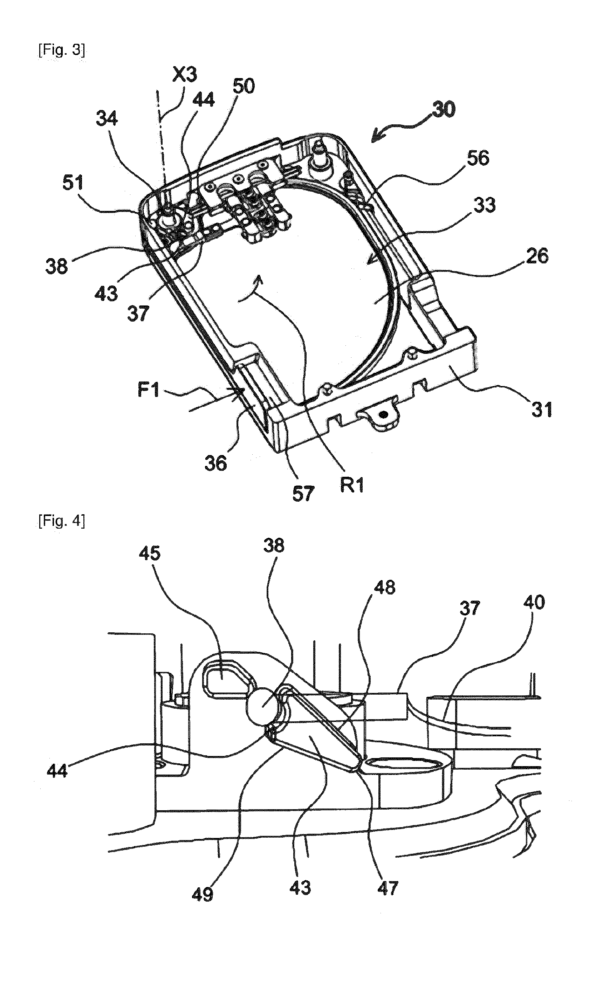

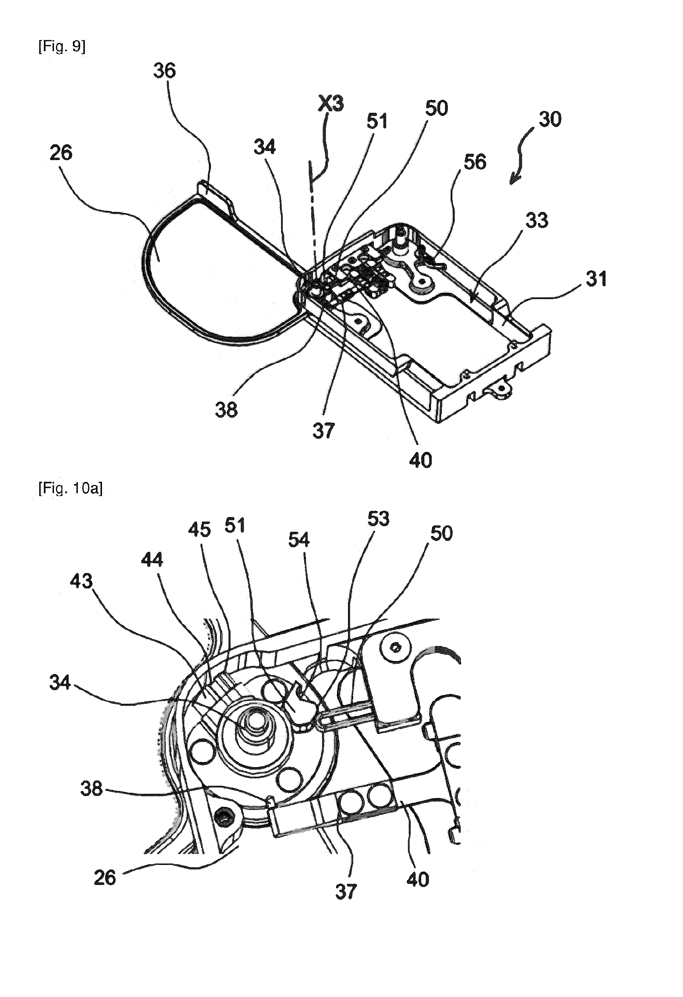

Comme on peut le voir sur la figure 2, la tablette 26 appartient à un meuble 30 comportant un châssis 31 délimitant un logement 33. Comme cela est montré sur la figure 3, une liaison pivot 34 d'axe X3 est disposée entre la tablette 26 et le châssis 31. La liaison pivot 34 permet d'autoriser une rotation de la tablette 26 par rapport au châssis 31 entre une position stockée dans laquelle la tablette 26 se situe à l'intérieur du logement 33 du châssis 31 et une position déployée dans laquelle la tablette 26 se situe à l'extérieur du logement 33 du châssis 31, tel que montré sur la figure 9.

La tablette 26 s'étend dans un plan horizontal. La tablette 26 comporte une poignée 36 en saillie par rapport au corps de la tablette 26. Comme cela est expliqué ci-après, cette poignée 36 peut être saisie par le passager suite à l'éjection de la tablette 26 pour faire passer la tablette 26 vers la position déployée.

Par ailleurs, comme cela est illustré notamment sur les figures 3, 5, et 6, un bras 37 fixe par rapport au châssis 31 porte un doigt de verrouillage 38. Le doigt de verrouillage 38 est constitué par un plot s'étendant en saillie par rapport à une extrémité du bras 37. Le doigt de verrouillage 38 s'étend suivant une direction d'allongement longitudinale horizontale. Le bras 37 comporte au moins une portion constituée par un organe élastique 40. L'organe élastique 40 peut par exemple être constitué par une ou plusieurs lames métalliques flexibles disposées les unes au-dessus des autres.

Une came 43 bien visible sur la figure 4 est munie d'une empreinte de verrouillage 44 destinée à recevoir le doigt de verrouillage 38 lorsque la tablette 26 se trouve en position stockée. En effet, comme cela est expliqué plus en détails ci-après, l'organe élastique 40 sollicite, lorsqu'il est sous tension, le doigt de verrouillage 38 à l'intérieur de l'empreinte de verrouillage 44 lorsque la tablette 26 de verrouillage est en position stockée. L'empreinte de verrouillage 44 présente une forme complémentaire de celle du doigt de verrouillage 38. En vue de côté, l'empreinte de verrouillage 44 présente par exemple une forme en arc de cercle. Toute autre forme de l'empreinte de verrouillage 44 adaptée à la forme du doigt de verrouillage 38 est envisageable.

La came 43 comporte une pointe arrondie 47 à une extrémité. L'empreinte de verrouillage 44 est située du côté opposé par rapport à la pointe arrondie 47.

La came 43 comporte en outre une pente latérale supérieure 48 et une pente latérale inférieure 49. Chaque pente latérale 48, 49 s'étend chacune entre la pointe arrondie 47 et l'empreinte de verrouillage 44. Les deux pentes latérales 48, 49 forment un angle non nul l'une par rapport à l'autre.

La pente latérale supérieure 48 est destinée à guider le doigt de verrouillage 38 vers l'empreinte de verrouillage 44 tout en mettant sous tension l'organe élastique 40 lorsque la tablette 26 passe de la position déployée à la position stockée.

La came 43 peut être associée à une butée de guidage 45. La butée de guidage 45 vise à garantie que le doigt de verrouillage 38 vienne s'engager à l'intérieur de l'empreinte de verrouillage 44 lors d'un déplacement vertical du doigt de verrouillage 38. La butée de guidage 45 guide latéralement le doigt de verrouillage 38 vers l'empreinte de verrouillage 44 lors de ce déplacement vertical. La butée de guidage 45 peut comporter une face biseautée facilitant le guidage du doigt de verrouillage 38 vers l'empreinte de verrouillage 44.

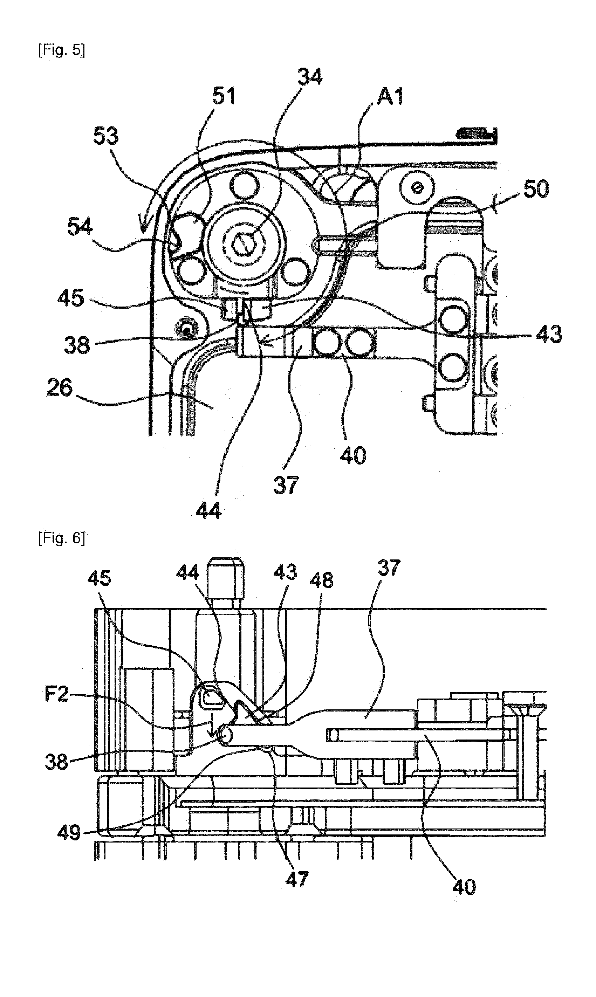

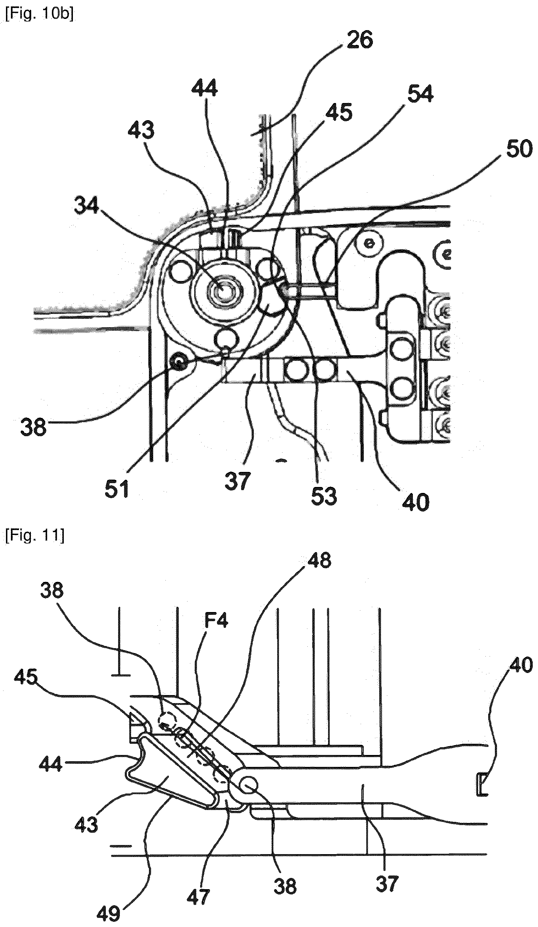

Par ailleurs, comme cela est visible sur les figures 5, 10a et 10b, une lame ressort 50 est destinée à coopérer avec une butée de fin de course 51 lorsque la tablette 26 est en position déployée. La lame ressort 50 est fixe par rapport au châssis 31. La lame ressort 50 présente de préférence une forme en U. La butée de fin de course 51 est liée mécaniquement à la tablette 26.

Plus précisément, la butée de fin de course 51 comporte une portion saillante 53 constituant un point dur et une portion de réception 54 de la lame ressort 50. La portion de réception 54 présente une forme complémentaire de celle de la lame ressort 50. Le point dur 53 correspond à une zone proche de la position déployée de la tablette 26 dans laquelle le déploiement de la tablette 26 nécessitera plus d'effort de la part du passager que dans le reste de la course de déploiement allant de la position stockée à la position déployée. À cet effet, la portion saillante 53 de la butée de fin de course 51 est configurée pour engendrer une déformation de la lame ressort 50 avant que cette dernière vienne glisser à l'intérieur de la portion de réception 54. La butée de fin de course 51 présente une forme en S, une portion bombée du S formant le point dur 53 et une portion creuse du S formant la portion de réception 54 de la lame ressort 50.

La tablette 26 intègre la came 43. Avantageusement, la tablette 26 intègre la butée de fin de course 51, de sorte que la tablette 26, la came 43, et la butée de fin de course 51 forment une pièce monobloc. La came 43 et la butée de fin de course 51 peuvent être moulés avec la tablette 26. La tablette 26 peut par exemple être réalisé dans un matériau plastique ou dans un matériau composite.

Comme on peut le voir sur la figure 5, un angle A1 entre la butée de fin de course 51 et l'empreinte de verrouillage 44 de la came 43 correspond à l'angle de déploiement de la tablette 26. L'angle A1 est mesuré suivant le deuxième sens de rotation R2. L'angle A1 est mesuré en vue de dessus suivant un sens anti-horaire en partant de l'empreinte de verrouillage 44. En l'occurrence, l'angle A1 est de l'ordre de 270 degrés. Par "de l'ordre de", on entend une variation possible de plus ou moins 10% par rapport à la valeur indiquée. Alternativement, cet angle A1 est de l'ordre de 90 degrés, 180 degrés, ou tout autre angle adapté à l'application pour permettre un déploiement de la tablette 26. De préférence, la butée de fin de course 51 et le doigt de verrouillage 38 sont situés suivant une même circonférence par rapport à l'axe X3 de la liaison pivot 34.

Un ressort de rappel 56 visible sur les figures 3, 7, et 9, est fixé sur le châssis 31. Le ressort de rappel 56 est apte à se comprimer lors d'un appui sur la tablette 26 puis à se décomprimer pour éjecter la tablette 26 en dehors du châssis 31. Le ressort de rappel 56 présente une forme de lame incurvé.

On décrit ci-après le fonctionnement du système "push-pull" permettant de faire passer la tablette 26 de la position stockée à la position déployée.

Lorsque la tablette 26 se situe en position stockée à l'intérieur du logement 33 du châssis 31, l'organe élastique 40 sous tension sollicite le doigt de verrouillage 38 à l'intérieur de l'empreinte de verrouillage 44 (cf. figure 4). La lame ressort 50 est à l'état libre, c'est à dire qu'elle est désengagée de la butée de fin de course 51, tel que montré sur la figure 3.

Afin de faire passer la tablette 26 en position déployée, l'utilisateur appuie sur la tablette 26, ce qui entraîne une rotation de la tablette 26 à l'intérieur du châssis 31 suivant un premier sens de rotation R1 autour de l'axe X3. Afin d'autoriser cette rotation, le châssis 31 peut comporter un dégagement 57 (cf. figure 3) dans lequel se déplace la poignée 36 lorsqu'un effort est appliqué sur cette dernière suivant la flèche F1 en direction du logement 33 interne du châssis 31.

Le doigt de verrouillage 38 est alors libéré en dehors de l'empreinte de verrouillage 44 par l'organe élastique 40 qui exerce, suivant la flèche F2, un effort vers le bas en dehors de l'empreinte de verrouillage 44, tel que montré sur la figure 6. Le ressort de rappel 56 est également comprimé et applique un effort vers l'extérieur du logement 33 du châssis 31.

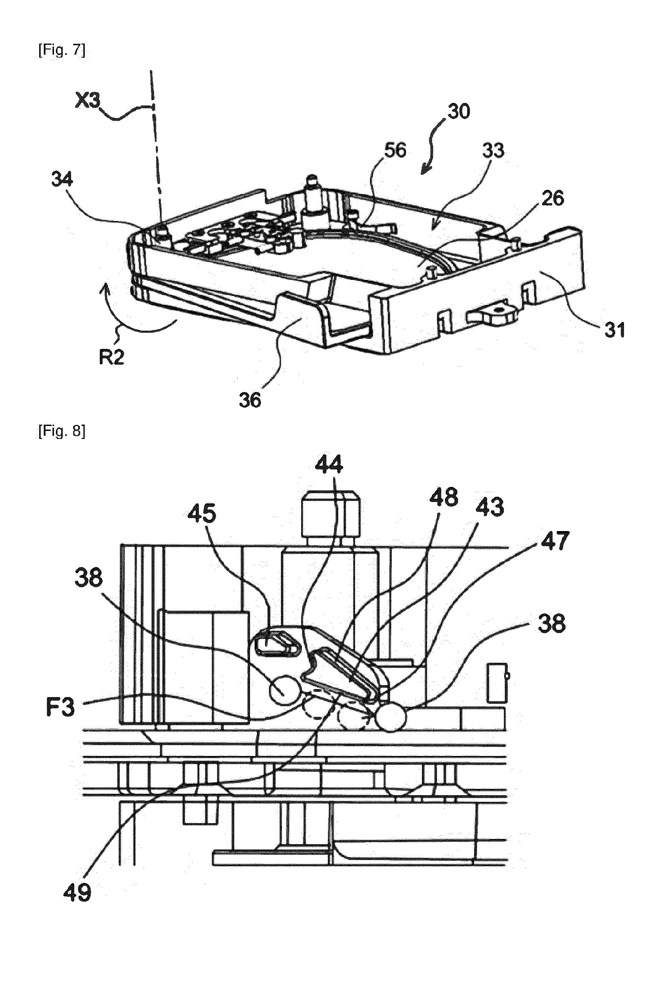

Lorsque l'utilisateur relâche l'effort appliqué sur la tablette 26, cette dernière est éjectée vers l'extérieur du logement 33 du fait de la décompression du ressort de rappel 56, tel que montré sur la figure 7. Lors de son éjection, la tablette 26 tourne autour de l'axe de la liaison pivot 34 suivant un deuxième sens de rotation R2 opposé au premier sens de rotation R1. Le doigt de verrouillage 38 se déplace le long de la pente latérale inférieure 49 de la came 43 suivant la trajectoire de la flèche F3 montrée sur la figure 8.

En tirant sur la poignée 36, l'utilisateur peut alors continuer la rotation de la tablette 26 vers la position déployée suivant le deuxième sens de rotation R2. L'utilisateur peut ainsi faire pivoter manuellement la tablette 26 jusqu'au point dur 53. La lame ressort 50 se déforme à l'endroit du point dur 53, tel que montré sur la figure 10a, puis glisse sur la butée de fin de course 51 jusqu'à coopérer avec la portion de réception 54 de la butée de fin de course 51, tel que montré sur la figure 10b. La tablette 26 est alors en position déployée tel que cela est montré sur la figure 9.

Afin de faire repasser la tablette 26 en position stockée, l'utilisateur tire sur la poignée 36 de façon à déformer la lame ressort 50 pour la faire ressortir de la portion de réception 54 et passer le point dur 53. L'utilisateur peut alors faire pivoter manuellement la tablette 26 vers l'intérieur du logement 33 suivant le premier sens de rotation R1.

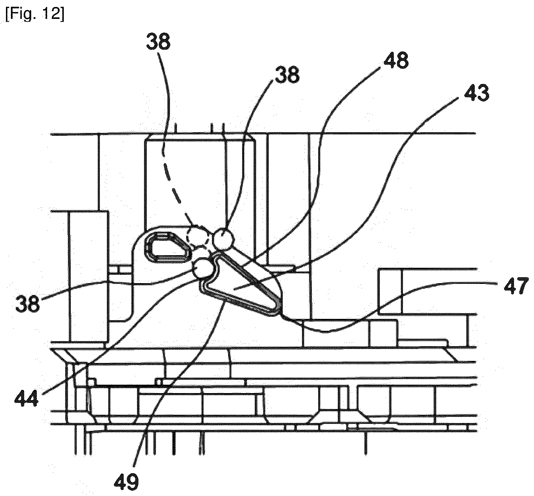

Comme cela est illustré par la figure 11, le doigt de verrouillage 38 arrive alors en contact avec la came 43 au niveau de la pointe arrondie 47. Le doigt de verrouillage 38 monte alors en suivant la pente latérale supérieure 48 de la came 43 (cf. flèche F4), ce qui a pour effet de plier et donc de mettre sous tension l'organe élastique 40. Sous l'action de l'organe élastique 40 sous tension, le doigt de verrouillage 38 subit un effort vertical vers le bas en direction de l'empreinte de verrouillage 44. Lorsque le doigt de verrouillage 38 arrive en appui contre la butée de guidage 45, cette dernière guide latéralement le doigt de verrouillage 38 pour que ledit doigt de verrouillage 38 vienne s'insérer à l'intérieur de l'empreinte de verrouillage 44, tel que montré sur la figure 12.

La tablette 26 est alors en position stockée. Le ressort de rappel 56 est légèrement comprimé.

L'invention a été décrite pour une tablette 26 de siège d'avion. Toutefois, le dispositif de déploiement de la tablette 26 précédemment décrit comportant l'ensemble "doigt de verrouillage 38-came 43-organe élastique 40" peut être intégré sans difficulté dans tout meuble comportant un élément mobile en rotation, comme par exemple une porte de meuble ou une étagère mobile en rotation.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que peut envisager l'homme du métier dans le cadre des revendications annexées.

## Revendications

1. Meuble (30) notamment pour un siège d'avion comportant:
- un châssis (31),
- un élément mobile (26),
- une liaison pivot (34) disposée entre l'élément mobile (26) et le châssis (31) pour autoriser une rotation de l'élément mobile (26) par rapport au châssis (31) entre une position stockée et une position déployée, et
- une came (43) munie d'une empreinte de verrouillage (44),
**caractérisé en ce que**
- la came (43) est intégrée à l'élément mobile (26),
- ledit meuble (30) comportant en outre un bras (37) fixe par rapport au châssis (31), ledit bras (37) portant un doigt de verrouillage (38),
- ledit bras (37) comportant au moins une portion constituée par un organe élastique (40) sollicitant, lorsqu'il est sous tension, le doigt de verrouillage (38) à l'intérieur de l'empreinte de verrouillage (44) lorsque l'élément mobile (26) est en position stockée,
- de sorte qu'un appui sur l'élément mobile (26) entraîne une rotation de l'élément mobile (26) suivant un premier sens de rotation (R1) et une libération du doigt de verrouillage (38) en dehors de l'empreinte de verrouillage (44) par l'organe élastique (40) pour autoriser une rotation de l'élément mobile (26) vers la position déployée suivant un deuxième sens de rotation (R2), le premier sens de rotation (R1) et le deuxième sens de rotation (R2) étant opposés l'un par rapport à l'autre.

2. Meuble selon la revendication 1, **caractérisé en ce qu'**il comporte un ressort de rappel (56) apte à se comprimer lors de l'appui sur l'élément mobile (26) puis à se décomprimer pour éjecter l'élément mobile (26) en dehors du châssis (31).

3. Meuble selon la revendication 1 ou 2, **caractérisé en ce qu'**il comporte une lame ressort (50) destinée à coopérer avec une butée de fin de course (51) lorsque l'élément mobile (26) est en position déployée.

4. Meuble selon la revendication 3, **caractérisé en ce que** la butée de fin de course (51) comporte une portion saillante (53) constituant un point dur et une portion de réception (54) de la lame ressort (50).

5. Meuble selon la revendication selon la revendication 4, **caractérisé en ce que** la butée de fin de course (51) présente une forme en S.

6. Meuble selon la revendication 4 ou 5, **caractérisé en ce que** l'élément mobile (26) intègre la came (43) et la butée de fin de course (51), de sorte que l'élément mobile (26), la came (43), et la butée de fin de course (51) forment une pièce monobloc.

7. Meuble selon l'une quelconque des revendications 3 à 6, **caractérisé en ce qu'**un angle (A1) entre la butée de fin de course (51) et l'empreinte de verrouillage (44) de la came (43) est de l'ordre de 270 degrés.

8. Meuble selon l'une quelconque des revendications 1 à 7, **caractérisé en ce que** la came (43) comporte au moins une pente latérale (48) destinée à guider le doigt de verrouillage (38) vers l'empreinte de verrouillage (44) tout en comprimant l'organe élastique (40) lorsque l'élément mobile (26) passe de la position déployée à la position stockée.

9. Meuble selon l'une quelconque des revendications 1 à 8, **caractérisé en ce que** l'élément mobile (26) est une tablette (26).

10. Unité de siège d'avion comportant un meuble (30) défini selon l'une quelconque des revendications 1 à 9.

## Patentansprüche

1. Möbelstück (30), insbesondere für einen Flugzeugsitz, mit:
- einem Gestell (31),
- einem beweglichen Element (26),
- einer Schwenkverbindung (34) zwischen dem beweglichen Element (26) und dem Gestell (31), um eine Drehung des beweglichen Elements (26) relativ zum Gestell (31) zwischen einer verstauten und einer ausgefahrenen Position zu ermöglichen, und
- einem Nocken (43) mit einer Verriegelungsaussparung (44),
**dadurch gekennzeichnet, dass**
- der Nocken (43) in das bewegliche Element (26) integriert ist,
- wobei das Möbelstück (30) ferner einen festen Arm (37) relativ zum Gestell (31) umfasst, dieser Arm (37) einen Verriegelungsfinger (38) trägt,
- wobei dieser Arm (37) mindestens einen Abschnitt umfasst, der aus einem elastischen Element (40) besteht, welches, wenn es unter Spannung steht, den Verriegelungsfinger (38) in die Verriegelungsaussparung (44) drückt, wenn sich das bewegliche Element (26) in der verstauten Position befindet.
- sodass ein Druck auf das bewegliche Element (26) eine Drehung des beweglichen Elements (26) in eine erste Drehrichtung (R1) und ein Lösen des Verriegelungsfingers (38) aus der Verriegelungsaussparung (44) mithilfe des elastischen Elements (40), um eine Drehung des beweglichen Elements (26) in Richtung der ausgefahrenen Position in eine zweite Drehrichtung (R2) zu ermöglichen, bewirkt, wobei die erste Drehrichtung (R1) und die zweite Drehrichtung (R2) einander entgegengesetzt sind.

2. Möbelstück nach Anspruch 1, **dadurch gekennzeichnet, dass** es eine Rückstellfeder (56) aufweist, die sich beim Ausüben von Druck auf das bewegliche Element (26) zusammendrücken und anschließend wieder entspannen kann, um das bewegliche Element (26) aus dem Gestell (31) auszuwerfen.

3. Möbelstück nach Anspruch 1 oder 2, **dadurch gekennzeichnet, dass** es eine Federklinge (50) umfasst, die mit einem Endstellungsanschlag (51) zusammenwirkt, wenn sich das bewegliche Element (26) in der ausgefahrenen Position befindet.

4. Möbelstück nach Anspruch 3, **dadurch gekennzeichnet, dass** der Endstellungsanschlag (51) einen vorstehenden Abschnitt (53) als Befestigungspunkt und einen Aufnahmeabschnitt (54) für das Federblatt (50) umfasst.

5. Möbelstück nach Anspruch 4, **dadurch gekennzeichnet, dass** der Endstellungsanschlag (51) eine S-Form aufweist.

6. Möbelstück nach Anspruch 4 oder 5, **dadurch gekennzeichnet, dass** das bewegliche Element (26) den Nocken (43) und den Endstellungsanschlag (51) integriert, sodass das bewegliche Element (26), der Nocken (43) und der Endstellungsanschlag (51) aus einem Stück sind.

7. Möbelstück nach einem der Ansprüche 3 bis 6, **dadurch gekennzeichnet, dass** der Winkel (A1) zwischen dem Endstellungsanschlag (51) und der Verriegelungsaussparung (44) im Nocken (43) in der Größenordnung von 270 Grad liegt.

8. Möbelstück nach einem der Ansprüche 1 bis 7, **dadurch gekennzeichnet, dass** der Nocken (43) mindestens eine seitliche Neigung (48) aufweist, um den Verriegelungsfinger (38) in Richtung der Verriegelungsaussparung (44) zu führen und gleichzeitig das elastische Element (40) zusammenzudrücken, wenn sich das bewegliche Element (26) von der ausgefahrenen Position in die verstaute Position bewegt.

9. Möbelstück nach einem der Ansprüche 1 bis 8, **dadurch gekennzeichnet, dass** das bewegliche Element (26) eine Tischklappe (26) ist.

10. Flugzeugsitzeinheit mit einem Möbelstück (30) nach einem der Ansprüche 1 bis 9.

## Claims

1. An item of furniture (30) in particular for an aircraft seat including:
- a frame (31),
- a mobile element (26),
- a pivot connection (34) between the mobile element (26) and the frame (31) to allow a rotation of the mobile element (26) relative to the frame (31) between a stored position and a deployed position, and
- a cam (43) provided with a locking recess (44), **characterized in that**
- the cam (43) is integrated into the mobile element (26),
- said item of furniture (30) further including a fixed arm (37) relative to the frame (31), said arm (37) supporting a locking finger (38),
- said arm (37) including at least one portion consisting of an elastic member (40) which, when under tension, presses the locking finger (38) into the locking recess (44) when the mobile element (26) is in the stored position,
- so that a press on the mobile element (26) causes a rotation of the mobile element (26) in a first direction of rotation (R1) and a release of the locking finger (38) out of the locking recess (44) by means of the elastic member (40) to allow a rotation of the mobile element (26) towards the deployed position in a second direction of rotation (R2), the first direction of rotation (R1) and the second direction of rotation (R2) being opposite one another.

2. The item of furniture according to claim 1, **characterized in that** it comprises a return spring (56) capable of being compressed when pressure is applied to the mobile element (26) and then decompressed in order to eject the mobile element (26) out of the frame (31).

3. The item of furniture according to claim 1 or 2, **characterized in that** it comprises a spring blade (50) for cooperating with a limit-of-travel stop (51) when the mobile element (26) is in the deployed position.

4. The item of furniture according to claim 3, **characterized in that** the limit-of-travel stop (51) includes a projecting portion (53) constituting a hard point and a receiving portion (54) for the spring blade (50).

5. The item of furniture according to claim 4, **characterized in that** the limit-of-travel stop (51) has an S-shape.

6. The item of furniture according to claim 4 or 5, **characterized in that** the mobile element (26) integrates the cam (43) and the limit-of-travel stop (51), so that the mobile element (26), the cam (43), and the limit-of-travel stop (51) form a single piece.

7. The item of furniture according to any one of the claims 3 to 6, **characterized in that** an angle (A1) between the limit-of-travel stop (51) and the locking recess (44) in the cam (43) is of the order of 270 degrees.

8. The item of furniture according to any one of the claims 1 to 7, **characterized in that** the cam (43) includes at least one lateral slope (48) for guiding the locking finger (38) towards the locking recess (44) while compressing the elastic member (40) when the mobile element (26) moves from the deployed position to the stored position.

9. The item of furniture according to any one of the claims 1 to 8, **characterized in that** the mobile element (26) is a tray table (26).

10. An aircraft seat unit including an item of furniture (30) defined according to any one of the claims 1 to 9.
